# EUROPÄISCHE PATENTSCHRIFT

(11) **EP 2 467 611 B1**
(45) Veröffentlichungstag und Bekanntmachung des Hinweises auf die Patenterteilung: **10.12.2014**
(21) Anmeldenummer: 10734136.4
(22) Anmeldetag: 21.07.2010
(51) Int. Cl.: F16D 63/00, B60T 1/00, F16H 63/34

(54) **RADIAL WIRKENDE ROTATIONSARRETIERUNG**
RADIALLY ACTING ROTATIONAL STOP
DISPOSITIF D'ARRÊT DE ROTATION À EFFET RADIAL

(30) Priorität: 17.08.2009 DE 102009037753
(43) Veröffentlichungstag der Anmeldung: 27.06.2012
(73) Patentinhaber: Schaeffler Technologies GmbH & Co. KG, 91074 Herzogenaurach (DE)
(72) Erfinder: SMETANA, Tomas, 91074 Herzogenaurach (DE); KLINGER, Markus, 91798 Höttingen (DE)
(86) Internationale Anmeldenummer: PCT/EP2010/060528
(87) Internationale Veröffentlichungsnummer: WO 2011/020669

(56) Entgegenhaltungen:
- EP-A1- 2 006 565
- WO-A1-2007/086127
- WO-A1-2009/033939
- JP-A- 2006 198 377
- JP-A- 2007 211 974

## Beschreibung

### Gebiet der Erfindung

Die Erfindung betrifft eine radial wirkende Rotationsarretierung. Im Besonderen betrifft die Erfindung eine Rotationsarretierung mit einem um eine Rotationsachse angeordneten Sperrkörper. Es ist mindestens ein Sperrelement radial mit dem Sperrkörper in Formschluss bringbar. Der Sperrkörper hat hierzu eine Vielzahl von Aufnahmen für das Sperrelement ausgebildet.

Mechanische Sperren in Kraftfahrzeuggetrieben sind insbesondere bei automatischen Getrieben notwendig, da hier keine Möglichkeit besteht, im Stillstand des Fahrzeuges, wie bei Handschaltgetrieben, eine Fahrstufe einzulegen und auf diese Weise mittels geschlossener Kupplung ein Wegrollen des Fahrzeugs zu verhindern. Neben einer mechanischen Feststellbremse ist bei automatischen Getrieben eine zusätzliche Getriebesperre erforderlich, die den Antriebsstrang des Fahrzeugs blockiert und im Stillstand des Fahrzeugs dessen Rollen verhindert.

Da für die verschiedenen Fahrzeugtypen eine große Vielzahl von Getriebetypen erforderlich ist, sind auch zahlreiche unterschiedliche Varianten von sog. Wegfahrsperren erforderlich, da diese dem jeweiligen Getriebe angepasst sein müssen. Nachteilig kann es zudem sein, dass eine solche Blockiereinheit eine separate Baugruppe im Getriebe darstellt, die einerseits einen bestimmten Bauraum benötigt. Zudem ist zur Betätigung ein zusätzlicher, für andere Zwecke nicht verwendbarer Betätigungsmechanismus erforderlich.

Eine Parksperre für ein Kraftfahrzeuggetriebe geht aus der DE 10 2005 037 524 A1 hervor, Diese Parksperre umfasst einen Sperrmechanismus mit einem Sperrelement, das als ein in einer Führung radial beweglicher Sperrzahn ausgebildet ist. Der Sperrzahn ist von einem Parksperrrad weg formschlüssig gegen die Kraft einer Feder bewegbar, wobei ein Widerlager der Feder radial zum Parksperrrad hin formschlüssig bewegbar ist. Zudem ist ein Wählhebel vorgesehen, der die formschlüssigen Bewegungen des Sperrzahnes und des Widerlagers bewirkt.

Eine Wegfahrsperre für Kraftfahrzeuge, die eine Blockade eines Schaltgetriebes ermöglichen, ist aus der US 1,901,361 bekannt.

Ein bekanntes Kraftfahrzeuggetriebe mit Parksperre geht aus der DE 103 10 977 B4 hervor. Diese Parksperre umfasst einen Sperrmechanismus mit Sperrklinke, die schwenkbar an einem Getriebegehäuse gelagert ist. Zudem ist ein Schieber vorgesehen, der zum Aktivieren der Parksperre zwischen das Getriebegehäuse und die Sperrklinke schiebbar ist.

Eine gattungsgemäße Rotationsarretierung geht aus WO 2009/033939 A1 hervor.

Eine Aufgabe der vorliegenden Erfindung wird darin gesehen, eine Rotationsarretierung zu schaffen, die eine deutliche Erhöhung der Leistungsdichte aufweist und zusätzlich ein robustes Design besitzt. Hinzu kommt, dass durch die erfindungsgemäße Rotationsarretierung eine Kostenreduzierung und eine Vereinfachung des Aufbaus erreicht werden soll.

Die erfindungsgemäße Rotationsarretierung, welche insbesondere als Parksperre eingesetzt werden soll, umfasst eine erste Ausführungsform, bei der sich die Sperrelemente radial nach außen bewegen. Gemäß einer zweiten Ausführungsform der Erfindung bewegen sich die Sperrelemente radial nach innen und wirken mit dem Sperrkörper zusammen.

Die erfindungsgemäße Rotationsarretierung umfasst einen um eine Rotationsachse angeordneten Sperrkörper. Dabei ist mindestens ein Sperrelement radial mit dem Sperrkörper in Formschluss bringbar, wobei der Sperrkörper hierzu eine Vielzahl von Aufnahmen für das Sperrelement ausgebildet hat. Dadurch wird eine Sperrung der Rotation erzielt. Das Sperrelement hat einen Bolzen ausgeformt, der zur radialen Betätigung des Sperrelements in einer Kontur geführt ist.

Für die radiale Führung der Sperrelemente ist eine Trägerscheibe vorgesehen. Eine Führungsscheibe sitzt auf der Trägerscheibe, wobei in der Führungsscheibe pro Sperrelement die Kontur für den Bolzen des Sperrelements ausgebildet ist. Die Kontur ist Z-förmig ausgeformt.

Die Sperrkörper selbst können aus einem Blech ausgestanzt werden. Bei einer Ausführungsform ist der Bolzen des Sperrelements durchgesetzt. Eine weitere Ausführungsform des Sperrelements besteht darin, dass eine Zylinderrolle in eine Bohrung des Sperrelements eingeprägt ist und somit den Bolzen für das Sperrelement bildet.

Ebenso sind die Führungsscheibe und die mindestens eine Kontur in der Führungsscheibe mittels eines Stanzprozesses hergestellt.

Wie bereits erwähnt, existieren für die Rotationsarretierung zwei Ausführungsformen. Bei einer ersten Ausführungsform sind die Sperrelemente radial nach außen bewegbar, um mit dem Sperrkörper zusammenzuwirken. Gemäß einer anderen Ausführungsform sind die Sperrelemente radial nach innen bewegbar, um mit dem Sperrkörper zusammenzuwirken und die erforderliche Sperrung zu bewirken.

Gemäß einer ersten Ausführungsform der Rotationsarretierung ist die Trägerscheibe mit einem Getriebegehäuse drehfest verbunden. An dem Getriebegehäuse sitzt der Sperrkörper. Die erfindungsgemäße Rotationsarretierung bzw. Parksperre setzt sich im Wesentlichen aus einer Betätigungsscheibe, einer Führungsscheibe, einer Trägerscheibe und einer Haltescheibe zusammen. Um die Sperrung zu erreichen, sind mehrere Sperrelemente vorgesehen. In der bevorzugten Ausführungsform sind drei Sperrelemente radial am Umfang der Trägerscheibe verteilt. Bei der hier beschriebenen Ausführungsform ist die Rotationsarretierung bzw. das Sperrelement, welches als Rad ausgebildet ist und eine seitlich ausgeformte Keilverzahnung besitzt, direkt in das Stirnrad integriert. Die Trägerscheibe der Rotationsarretierung muss mit dem Getriebegehäuse verbunden werden. Für die Verbindung zwischen der Trägerscheibe und dem Getriebegehäuse gibt es mehrere Alternativen, wie z. B. Keilverzahnung, Vernieten oder partielles Verschweißen.

Wie bereits oben erwähnt, ist die Kontur für die Führung der Sperrelemente als einfache Z-förmige Kontur ausgebildet. Diese Z-förmige Kontur enthält alle für die Betätigung notwendigen Funktionsflächen. Im entlasteten (entriegelten) Zustand wird das Sperrelement durch die untere tangentiale Kontur gegen selbstständiges Einrasten (z. B. aufgrund von Stoßbelastungen oder Vibrationen) formschlüssig gehalten. Durch die schräge Kontur wird das Sperrelement radial nach außen in die verriegelte Position geschoben. Durch die obere tangentiale Kontur wird das Sperrelement gegen das selbstständige Entriegeln formschlüssig gesichert.

Ferner kann das Sperrelement mit einem elastischen Element vorgespannt werden. Als elastisches Element kann z. B. eine Faltfeder verwendet werden. Die Faltfedern verhindern Rasseln der Sperrelemente aufgrund von Fertigungstoleranzen. Die Faltfedern sind jedoch für die primäre Funktion des Ein-/Ausrastens nicht erforderlich. Die Sperrelemente werden lediglich durch die Form der Kontur betätigt.

Gemäß einer Ausführungsform sitzt eine Betätigungsscheibe auf der Führungsscheibe. Zwischen der Betätigungsscheibe und der Führungsscheibe sind Schraubenfedern vorgesehen, die die auf die Betätigungsscheibe wirkenden Kräfte in die Führungsscheibe leiten.

Gemäß einer weiteren Ausführungsform der Erfindung ist die Trägerscheibe mit einer Außenverzahnung versehen, die eine formschlüssige Verbindung mit dem Getriebegehäuse bildet. Bei dieser Ausführungsform ist die Führungsscheibe gleichzeitig auch die Betätigungsscheibe. Der Sperrkörper selbst ist mit dem Getriebeträger fest verbunden. Als feste Verbindung ist eine Vernietung denkbar. Der Sperrkörper ist als Rad ausgebildet und ist aus einem Blech geformt. Ferner sind Bohrungen für die Nietverbindung vorgesehen.

Bei der zweiten Ausführungsform der Rotationsarretierung handelt es sich um ein Elektrodifferenzial mit integrierter Parksperre. Dabei sind die Sperrelemente radial nach innen wirkend ausgebildet. Die Parksperre wurde dabei im Bereich des Stirnraddifferenzials bauraumsparend positioniert. Die Bauteile wurden dabei von der ersten Ausführungsform der Rotationsarretierung übertragen bzw. an die Betätigung von außen nach innen modifiziert. Das Sperrelement (radförmiges Sperrelement) wurde aus Blech direkt mit dem Differenzialträger vernietet. Die Trägerscheibe mit der Außenkeilverzahnung wird dagegen im Getriebegehäuse formschlüssig gehalten. Die wesentlichen Funktionsmerkmale des Sperrelements, wie z. B. Führungsbolzen oder Form der Kontur zur Führung der Sperrelemente, wurden entsprechend der ersten Ausführungsform beibehalten. Ebenso kann auf die Einzelanfederung der Sperrelemente durch die Faltfeder verzichtet werden.

Weitere Merkmale, Ziele und Vorteile der vorliegenden Erfindung gehen aus der nun folgenden detaillierten Beschreibung der beiden Ausführungsformen der Erfindung hervor, welche nicht als beschränkend angesehen werden sollen. Ferner wird auf die beigefügten Zeichnungen Bezug genommen. Gleiche Bauteile weisen dabei grundsätzlich die gleichen Bezugszeichen auf und werden teilweise nicht mehr facherläutert.
- Fig. 1: zeigt eine perspektivische Explosionsdarstellung einer Rotationsarretierung gemäß der ersten Ausführungsform der Erfindung. Die Sperrelemente wirken dabei radial nach außen.
- Fig. 2: zeigt eine teilweise Schnittdarstellung der Rotationsarretierung in Verbindung mit einem Differenzial.
- Fig. 3: zeigt eine perspektivische Ansicht der Rotationsarretierung in zusammengebautem Zustand.
- Fig. 4: zeigt eine perspektivische Ansicht der Rotationsarretierung in Verbindung mit einem Differenzial.
- Fig. 5: zeigt eine perspektivische Ansicht der Rotationsarretierung im arretierten Zustand.
- Fig. 6: zeigt eine perspektivische Detailansicht eines Sperrelements.
- Fig. 7: zeigt eine Rückansicht der Rotationsarretierung im entriegelten Zustand.
- Fig. 8: zeigt die Rotationsarretierung in Verbindung mit dem Differenzial in ebenfalls entriegeltem Zustand.
- Fig. 9: zeigt eine Rückansicht der Rotationsarretierung im gesicherten Zustand.
- Fig. 10: zeigt die Rotationsarretierung in Verbindung mit dem Differenzial, wobei die Rotation durch die Sperrung der Sperrelemente gesichert ist.
- Fig. 11: zeigt schematisch die wirkenden Kräfte, welche bei der Betätigung der Rotationsarretierung auftreten.
- Fig. 12: zeigt eine perspektivische Ansicht der Anwendung einer Rotationsarretierung bei einem Stirnraddifferenzial.
- Fig. 13: zeigt ein Differenzial mit Planetenstufe, bei der die Rotationsarretierung integriert ist.
- Fig. 14: zeigt eine Seitenansicht der Rotationsarretierung, welche in einem Differenzial mit Planetenstufe integriert ist.
- Fig. 15: zeigt eine Rückansicht des Differenzials mit integrierter Rotationsarretierung und Planetenstufe.
- Fig. 16: zeigt eine perspektivische Detailansicht des Differenzials mit Planetenstufe und integrierter Rotationssperre.
- Fig. 17: zeigt eine perspektivische Detailansicht des Differenzials mit Planetenstufe und integrierter Rotationssperre, bei der die Kontur zur Führung der Sperrelemente sichtbar ist.
- Fig. 18: zeigt eine Rückansicht der Rotationsarretierung, bei der die Führungskonturen für die Sperrelemente sichtbar sind.
- Fig. 19: zeigt eine vergrößerte perspektivische Detailansicht der Rotationsarretierung, wobei die Kräfteverhältnisse während des Sperrens der Rotationssperre eingezeichnet sind.
- Fig. 20: zeigt eine perspektivische Ansicht des Differenzials mit Planetenstufe, wobei Teile der Rotationsarretierung zur besseren Übersicht entfernt worden sind.
- Fig. 21: zeigt eine Draufsicht auf eine Rotationsarretierung für ein E-Differenzial.
- Fig. 22: zeigt eine Seitenansicht der Rotationsarretierung für ein E-Differenzial.

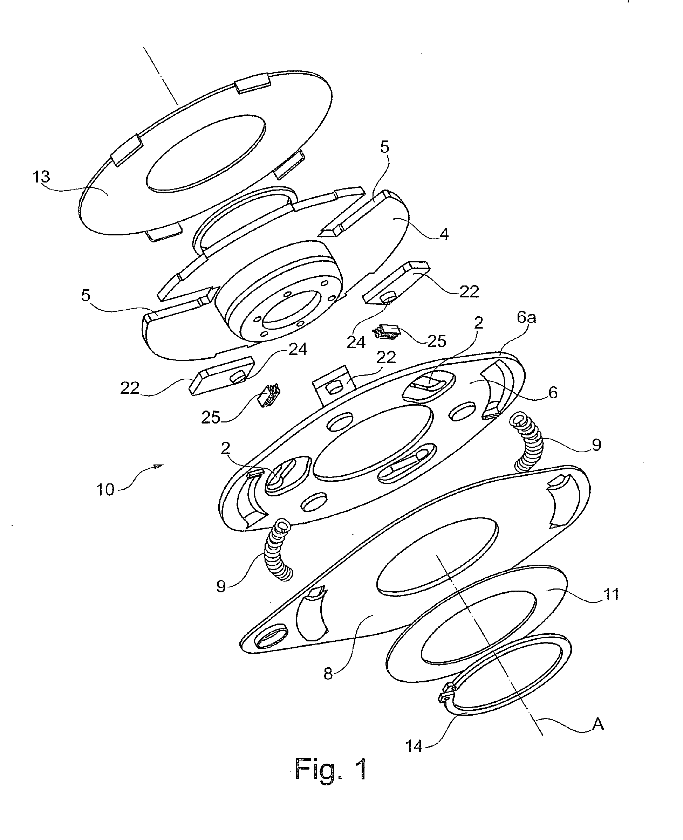

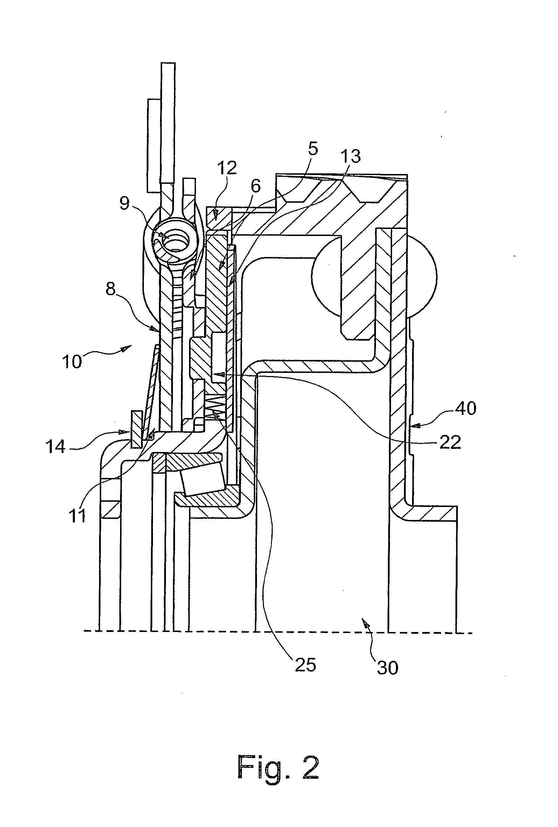

Figur 1 zeigt die perspektivische Explosionsdarstellung der Rotationsarretierung 10 gemäß der ersten Ausführungsform der Erfindung. Um eine Achse A sind die Bauteile der Rotationsarretierung 10 angeordnet. Die Rotationsarretierung umfasst mindestens ein Sperrelement 22, das in einer Trägerscheibe 4 für eine radiale Bewegung geführt ist. Hierzu sind in der Trägerscheibe 4 entsprechend Führungen 5 ausgeformt, über die das Sperrelement 22 radial nach außen bzw. radial nach innen geführt werden kann. In der hier gezeigten Ausführungsform sind drei Sperrelemente 22 gleich verteilt am Umfang der Trägerscheibe 4 angeordnet. Diese Sperrelemente 22 werden radial nach außen geführt. Mit anderen Worten bedeutet dies, dass für den Vorgang der Sperrung die Sperrelemente 22 sich von der Rotationsachse A nach außen wegbewegen. Um eine Sperrung zu erzielen, wirken die Sperrelemente 22 mit einem Sperrkörper 12 (siehe Figur 2) zusammen. Die Sperrelemente 22 können ferner mit Faltfedern 25 beaufschlagt werden. Die Betätigung der Sperrelemente 22 erfolgt über eine Führungsscheibe 6. In der Führungsscheibe 6 sind entsprechend der Anzahl der Sperrelemente 22 Konturen 2 ausgebildet. In jede der Kontur 2 greift ein Bolzen 24, der am Sperrelement 22 ausgebildet ist.

Durch Verdrehen der Führungsscheibe 6 wandern die Bolzen 24 der Sperrelemente 22 entlang der Führungskontur 2. Dadurch wird die Bewegung der Sperrelemente 22 radial nach außen bewirkt. Die Führungsscheibe 6 wird mittels einer Betätigungsscheibe 8 bewegt. Zwischen der Betätigungsscheibe 8 und der Führungsscheibe 6 sind Schraubenfedern 9 eingesetzt, welche als Federspeicher wirken. Der gesamte Aufbau der Rotationsarretierung 10 ist in einer Haltescheibe 13 gehaltert. Mit einem Sprengring 12 und einer Tellerfeder 11 wird der gesamte Aufbau der Rotationsarretierung 10 gegenüber dem Differenzialkorb 30 verspannt.

Figur 2 zeigt eine Teilansicht des Differenzials 40 in Verbindung mit der erfindungsgemäßen Rotationsarretierung 10. Wie bereits erwähnt, sitzen die Bauteile der Rotationsarretierung 10 auf der Haltescheibe 13. Die Trägerscheibe 4 folgt auf die Haltescheibe 13. Auf der Trägerscheibe 4 sitzt die Führungsscheibe 6, welche von der Betätigungsscheibe 8 gefolgt wird. Zwischen der Führungsscheibe 6 und der Betätigungsscheibe 8 sind die Schraubenfedern 9 eingesetzt. Für den Sprengring 14 und die Tellerfeder 11 werden die einzelnen Bauteile der Rotationsarretierung 10 gegenüber dem Differenzialkorb 30 verspannt. Der Sperrkörper 12 selbst ist fest mit dem Differenzialkorb 30 verbunden. Das Sperrelement 22 kann mittels einer Faltfeder 25 vorgespannt werden.

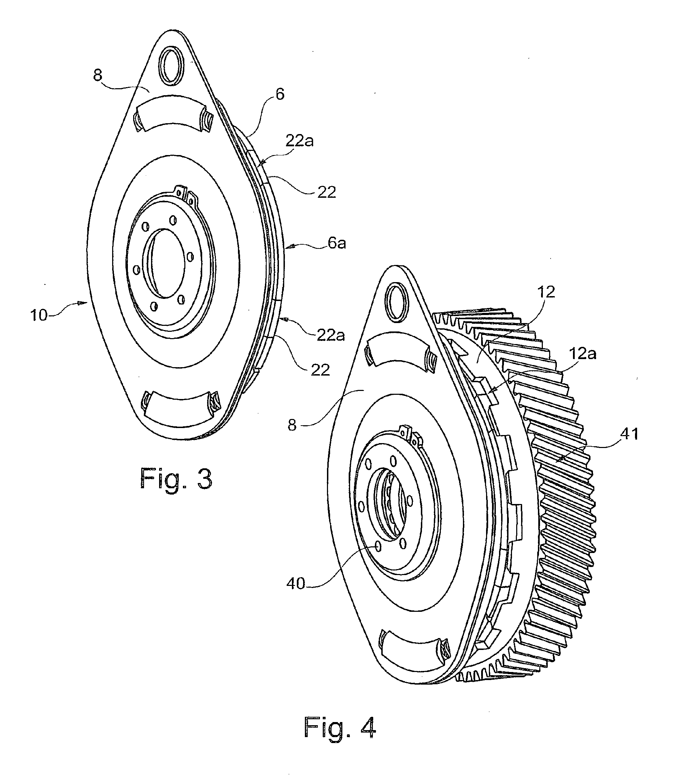

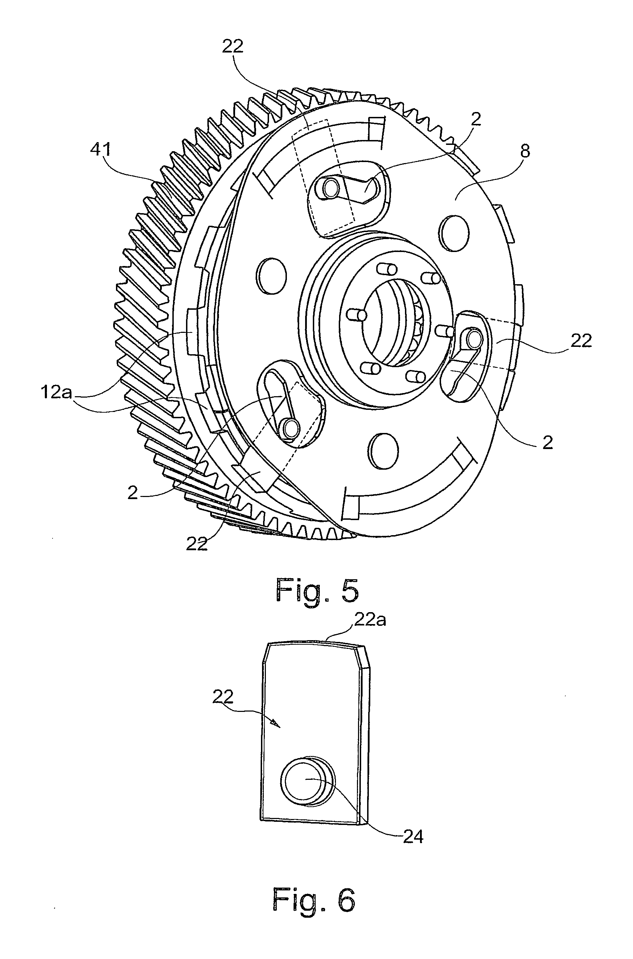

Figur 3 zeigt eine perspektivische Ansicht der Rotationsarretierung 10 gemäß dem ersten Ausführungsbeispiel der Erfindung. Die Rotationsarretierung 10 kann als einheitliches Bauteil in ein Differenzial 40 integriert werden (siehe hierzu Figur 4). In der in Figur 3 gezeigten Stellung der Rotationsarretierung 10 fluchten die Stirnflächen 22a der Sperrelemente 22 mit der Außenseite 6a der Trägerscheibe 6. Die Rotationsarretierung 10 wirkt direkt mit dem Sperrkörper 12 zusammen, der in das Stirnrad 41 des Differenzials 40 integriert ist. Der Sperrkörper 12 hat entsprechende Aufnahmen 12a ausgebildet, in die die Sperrelemente 22 für die Sperrung der Rotationsarretierung 10 einrasten. Figur 5 zeigt eine Ansicht der Rotationsarretierung 10 in Verbindung mit dem Differenzial 40. Im Stirnrad 41 des Differenzials 40 ist der Sperrkörper 12 ausgebildet. Durch die Betätigungsscheibe 8 werden die Sperrelemente 22 durch die Kontur 2 derart bewegt, dass sie in die Aufnahmen 12a des Sperrkörpers 12 einrasten.

In Figur 6 ist eine perspektivische Ansicht einer Ausführungsform des Sperrelements 22 dargestellt. Das Sperrelement 22 ist ein Stanzteil und besitzt im Wesentlichen die Form der Führungen 5, welche in der Trägerscheibe 4 ausgebildet sind. Ferner ist am Sperrelement 22 ein Bolzen 24 ausgeformt, der in der Kontur 2 geführt ist, um letztendlich das Sperrelement 22 in Formschluss mit der Aufnahme 12a des Sperrelements 12 zu bringen.

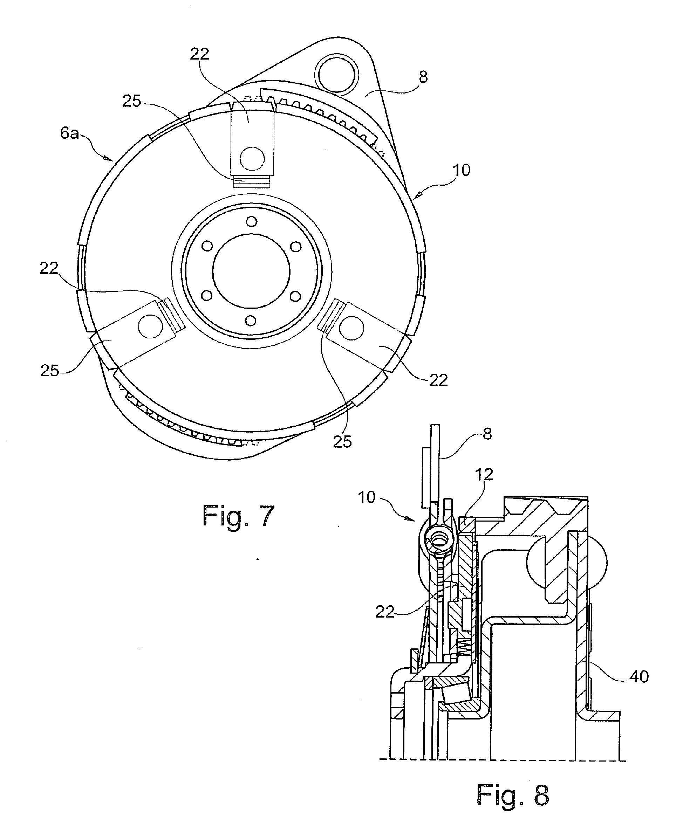

Figur 7 zeigt die Rückansicht der Rotationsarretierung 10. Die Sperrelemente 22 fluchten mit der Außenseite 6a der Trägerscheibe 6. Es sind hier drei Sperrelemente 22 vorgesehen, welche gleich verteilt am Umfang der Rotationsarretierung 10 angeordnet sind.

In Figur 8 ist die Schnittansicht der in Figur 7 gezeigten Stellung der Rotationsarretierung 10 dargestellt. Die Stellung des Betätigungselements 8 ist dabei derart, dass die Sperrelemente 22 nicht mit dem Sperrkörper 12, welcher am Differenzial 40 angeordnet ist, in Kontakt sind. Die Rotationsarretierung 10 ist somit entriegelt.

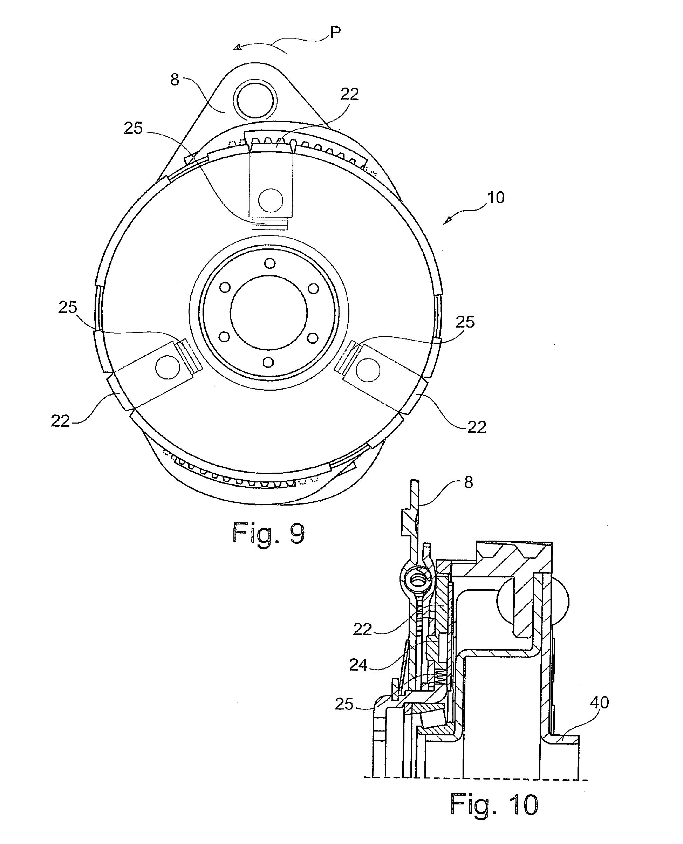

Figur 9 zeigt die Stellung der Rotationsarretierung 10 in der gesicherten Stellung. Durch die Bewegung der Betätigungsscheibe 8 in Richtung des Pfeils P wandern die Sperrelemente 22 in den Konturen 2 und bewirken somit die in Figur 10 gezeigte Stellung, bei der die Sperrelemente 22 mit dem Sperrkörper 12, welcher am Differenzial 40 angebracht ist, in Kontakt treten. Die zusätzlichen Federelemente 25 unterstützen die radiale Bewegung der Sperrelemente 22. Es kann auf diese Federelemente 25 verzichtet werden, da die Bewegung der Sperrelemente 22 letztendlich im Wesentlichen durch die Führung 5 in der Trägerscheibe 4 bzw. durch die Führung der Bolzen 24 in der Kontur 2 der Führungsscheibe 6 bewirkt wird.

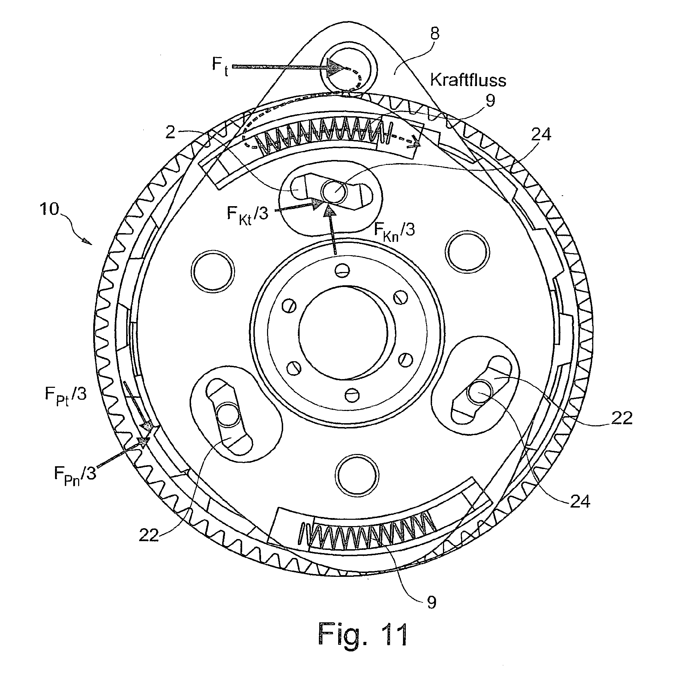

Figur 11 zeigt die Kräfte, die während der Betätigung der Betätigungsscheibe 8 der Rotationsarretierung 10 auftreten. Eine Kraft Fₜ wirkt auf das Betätigungselement 8. Der Kraftfluss wird über die gestrichelte Linie und über die Federspeiche 9 übertragen. Durch die Bewegung der Betätigungsscheibe 8 gleiten die Bolzen 24 der Sperrelemente 22 in der Kontur 2. Durch die Berührungspunkte des Bolzens 24 mit der Kontur 2 tritt eine Kraft F_{Kn}/3 auf, welche senkrecht zu einer Kraft F_{Kt}/3 liegt. Ebenso tritt im Bereich der Aussparung 12a des Sperrkörpers 12 eine radiale Kraft F_{Pt}/3 wie eine dazu senkrechte Kraft F_{Pn}/3 auf. Es kommt zu einem Einrasten der Sperrelemente 22 nur dann, wenn die Kraft F_{P}<=F_{K} ist. Da in dem hier dargestellten Ausführungsbeispiel drei Sperrelemente 22 für die Arretierung der Rotationsarretierung 10 vorgesehen sind, werden die einzelnen auftretenden Kräfte gedrittelt. Die Kräfte werden von der Betätigungsscheibe 8 über die Feder 9 in die Führungsscheibe 4 mit den Sperrelementen 22 geleitet. Dadurch wird sichergestellt, dass die Sperrelemente 22 erst unterhalb einer kritischen Geschwindigkeit einrasten. Ist die Umfangsgeschwindigkeit der Rotationsarretierung 10 zu hoch, werden die Sperrelemente 22 (mit nicht selbst hemmender Kontur 2) zurückbefördert. Die daraus resultierende Energie wird in den Federn 9 gespeichert und an die Sperrelemente 22 wieder abgegeben. Die Betätigung der Betätigungsscheibe 8 erfolgt mit Hilfe einer einfachen Schaltstange (hier nicht dargestellt). Die Betätigung kann ebenso mechanisch, elektrisch, magnetisch etc. erfolgen.

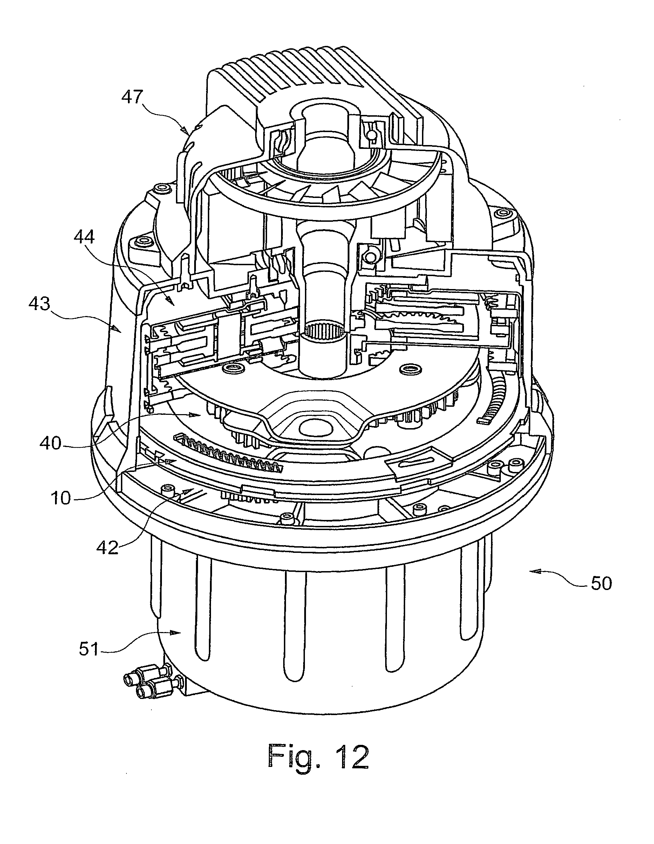

Figur 12 zeigt die schematische Darstellung eines Elektrodifferenzials 50 und der Verwendung der erfindungsgemäßen Rotationsarretierung 10 in diesem Elektrodifferenzial 50. Ein Hauptelektromotor 51 wirkt auf eine einfache Planetenstufe 42. Zwischen der einfachen Planetenstufe 42 und dem Differenzial 40 ist die Rotationsarretierung 10 eingebaut. In dem Differenzial sind die Vorlegestufen 45 nachgeschaltet. Auf die Vorlegestufen 45 wirkt der Elektromotor 47, der für das Torch-Vectoring vorgesehen ist. Die ganze Baueinheit, welche dem Hauptelektromotor 51 nachgeschaltet ist, ist von einem Getriebegehäuse 43 umgeben.

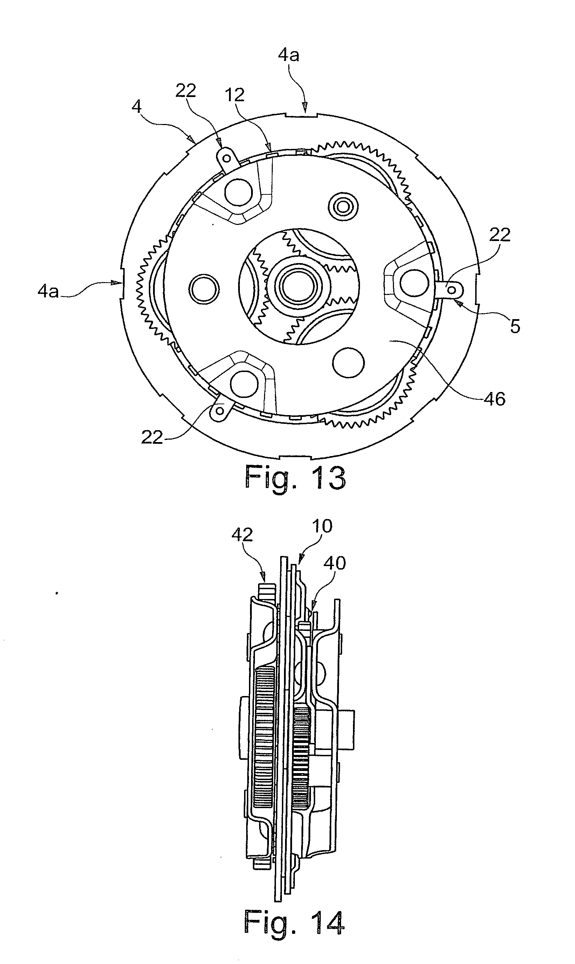

Figur 13 zeigt die Anwendung der Rotationsarretierung 10 gemäß dem zweiten Ausführungsbeispiel der vorliegenden Erfindung. Die Trägerscheibe 4 hat ebenfalls die Führungen 5 für die Sperrelemente 22 ausgebildet. Die Trägerscheibe 4 ist über formschlüssige Elemente 4a mit dem Getriebegehäuse 43 verbunden. Bei der in der Figur 13 gezeigten Ausführungsform sind drei Sperrelemente 22 vorgesehen, die jeweils unter einem Winkel von 120 ° voneinander beabstandet sind. Der Sperrkörper 12 ist als Rad aus Blech ausgebildet und direkt mit dem Differenzialträger 46 vernietet.

Figur 14 zeigt die Platz sparende Anordnung der Rotationssperre 10 innerhalb des Elektrodifferenzials 40. Die Rotationssperre 10 ist zwischen der Planetenstufe 42 und dem Differenzial 40 angeordnet.

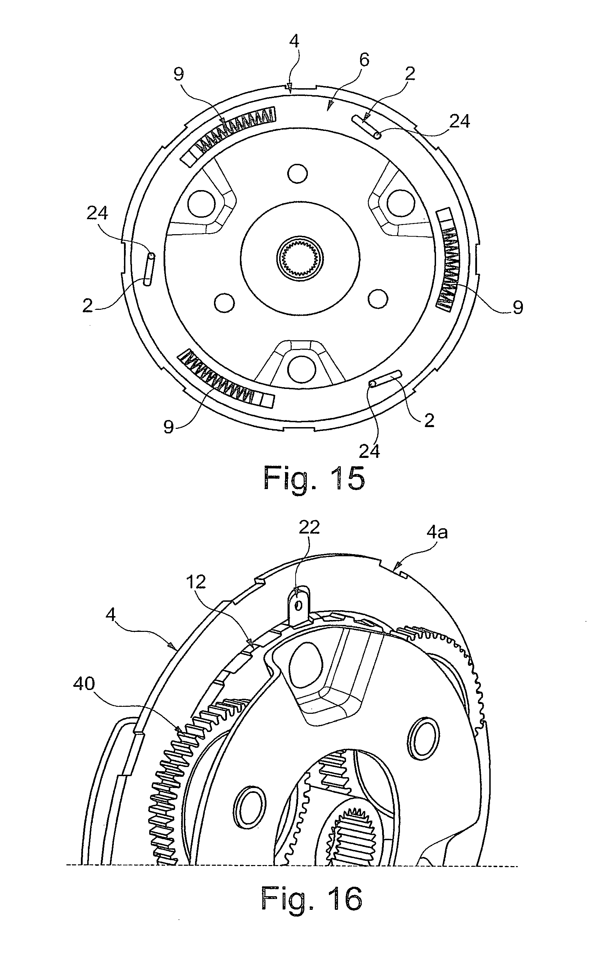

Figur 15 zeigt die Rückansicht der aus der Planetenstufe 42 der Rotationsarretierung 10 und dem Differenzial 40 bestehenden Baueinheit. Wie bereits in der Beschreibung zu Figur 13 erwähnt, hat die Trägerscheibe 4 die Führungen 5 für die Sperrelemente 22 ausgebildet. Die Führungsscheibe 6 sitzt auf der Trägerscheibe 4. In der hier dargestellten Ausführungsform ist die Führungsscheibe 6 gleichzeitig die Betätigungsscheibe. In der Führungsscheibe sind die Konturen 2 für die Sperrelemente 22 ausgebildet. Der Bolzen 24 der Sperrelemente 22 gleitet in der Kontur 2. Über die Federspeicher 9 wird die Drehbewegung bzw. die Kraft in die Führungsscheibe 6, welche Betätigungsscheibe ist, geleitet.

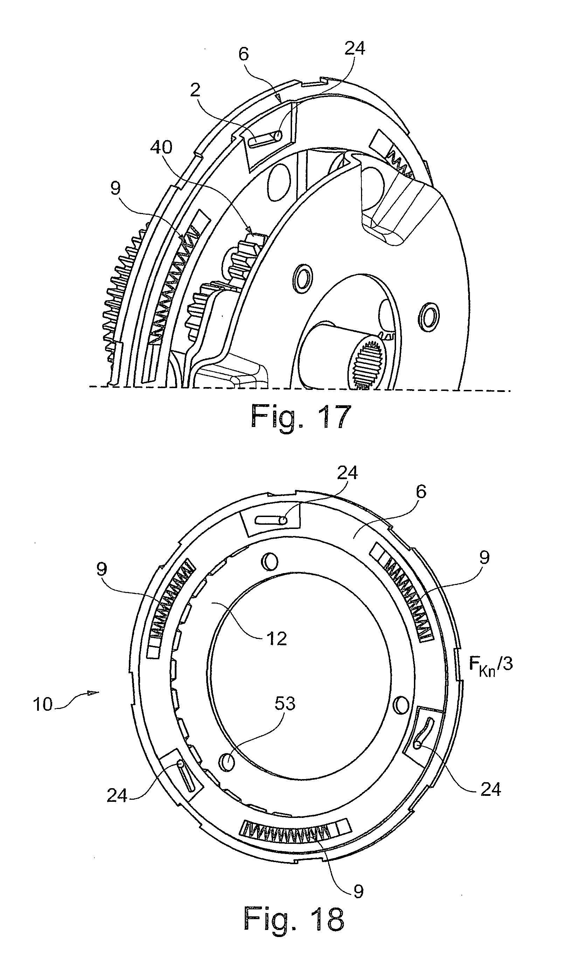

Figur 16 zeigt eine perspektivische Detailansicht der zweiten Ausführungsform, welche ein Differenzial 40 mit Planetenstufe 42 und integrierter Rotationsarretierung 10 zeigt. Der Sperrkörper 12, welcher als Rad ausgebildet ist, ist zwischen der Planetenstufe 22 und dem Differenzial 40 angeordnet. In der in Figur 16 und Figur 17 gezeigten Darstellung ist das Sperrelement in Wirkverbindung mit einer der Aufnahmen 12a des Sperrkörpers 12. Wie aus Figur 12 ersichtlich ist, ist der Bolzen 24 des Sperrelements 22 von einem Ende der Kontur 2 zum anderen Ende der Kontur gewandert. Dadurch wird die Sperrung der Rotationsarretierung 10 erreicht. Ebenso sind drei Federspeicher 9 vorgesehen, die entsprechend untereinander mit einem Abstand von 120 ° radial innerhalb der Rührungsscheibe 6 verteilt angeordnet sind.

Figur 18 zeigt eine Rückansicht der Rotationsarretierung 10 gemäß dem zweiten Ausführungsbeispiel der Erfindung. Die Führungsscheibe 6 hat drei Konturen 2 ausgebildet, innerhalb derer die Bolzen 24 für die Sperrelemente 22 gleiten. Entsprechend sind drei Aufnahmen für die Federspeicher 9 ausgebildet. Sowohl die Konturen als auch die Aufnahmen für die Federspeicher 9 sind im Winkel von 120 ° am Umfang der Führungsscheibe 6 angeordnet. Der Sperrkörper 12 ist bei dieser Ausführungsform als Rad ausgebildet und hat ebenfalls Bohrungen 53 ausgebildet, die für eine Nietverbindung zwischen dem Sperrkörper 12 und dem Differenzialträger 46 vorgesehen sind.

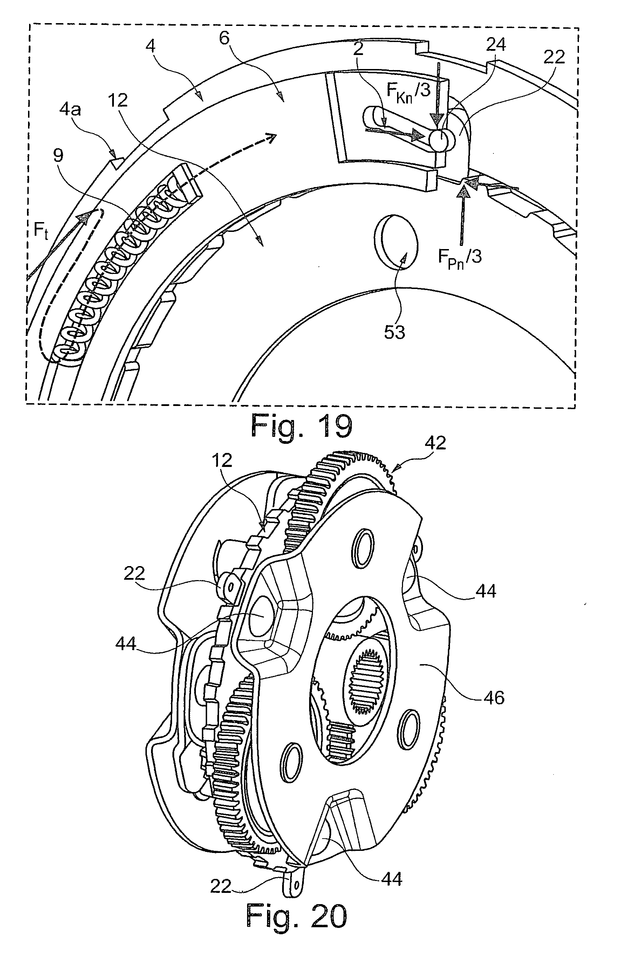

Figur 19 zeigt die Kräfteverhältnisse, welche bei der zweiten Ausführungsform der Erfindung vorliegen. Die Führungsscheibe 6 wirkt eine tangentiale Kraft Fₜ. Mit dieser Kraft wird die Führungsscheibe 6 um einen bestimmten Winkelbetrag gedreht. Die Kraft wird über die gestrichelte Linie und über die Federspeicher 9 eingeleitet. Durch die Drehbewegung der Führungsscheibe 6 kommt es ebenfalls zu einer radialen Bewegung der Kontur 2. Der Bolzen 24 des Sperrelements 22 bewegt sich somit entlang der Kontur 2. Tangential zum Berührungspunkt des Bolzens 24 mit der Kontur 2 treten Kräfte auf. Die tangentiale Kraft ist F_{Kt}/3, die Kraft senkrecht dazu ist F_{Kn}/3. Ebenso wirken auf den Berührungspunkt der Sperrelemente 22 mit den Aufnahmen 12a des Sperrkörpers 12 Kräfte, welche mit F_{Pn}/3 bzw. F_{Pt}/3 bezeichnet werden. Monolog zur ersten Ausführungsform sind diese Kräfte ebenfalls gebildet, da drei Sperrelemente 22 jeweils unter einem Winkel von 120 ° zueinander beabstandet auf der Führungsscheibe 6 angeordnet sind.

Figur 20 zeigt eine perspektivische Darstellung der Planetenstufe 42 in Verbindung mit dem Sperrkörper 12. Der Sperrkörper 12 ist mit der Planetenstufe 42 über Nietverbindungen drehfest verbunden. Obwohl in der zu Figur 20 dargelegten Beschreibung die Verbindungen aus Nietverbindungen 44 dargestellt sind, soll dies nicht als eine Beschränkung der Erfindung aufgefasst werden. Für einen Fachmann ist es selbstverständlich, dass zwischen Sperrkörper 12 und Differenzialträger 46 auch andere Arten einer drehfesten Verbindung realisiert werden können.

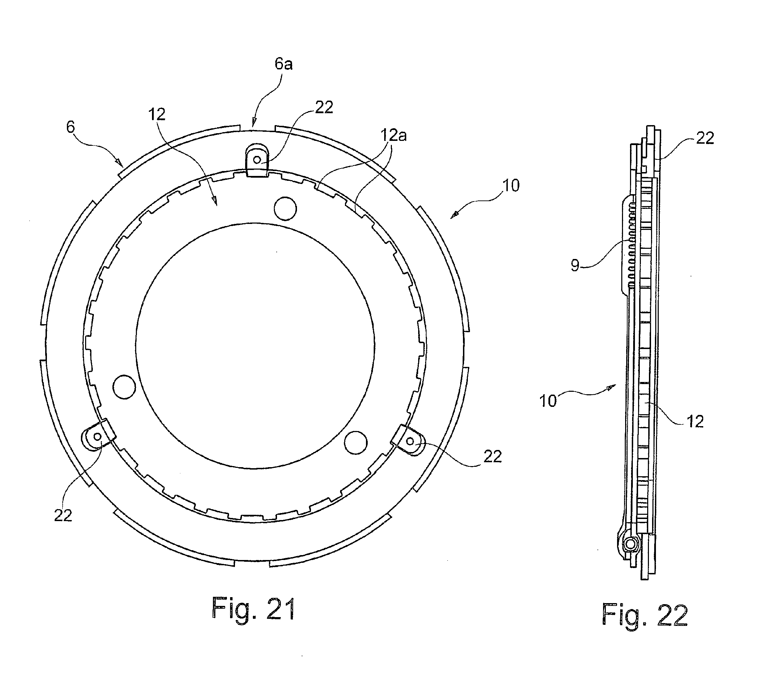

Figur 21 zeigt eine Draufsicht auf die Rotationsarretierung 10 gemäß der zweiten Ausführungsform der Erfindung. In Figur 22 ist eine Seitenansicht der Rotationsarretierung 10 gemäß der zweiten Ausführungsform der Erfindung dargestellt. Die Trägerscheibe 6 ist zugleich für die Führung der Sperrelemente 22 vorgesehen. Die Sperrelemente 22 wirken mit dem Sperrkörper 12 zusammen, der in Form eines Rades ausgebildet ist. Die Ausführungsform ermöglicht eine sehr flache Bauweise der Rotationsarretierung 10. Dies ist in Figur 22 verdeutlicht. Die Sperrelemente 22 liegen somit direkt über dem Sperrkörper 12, der die Vielzahl der Aufnahmen 12a für die Sperrelemente 22 ausgebildet hat. Die Sperrelemente 22 wirken somit radial nach innen, um eine formschlüssige Verbindung und somit eine Sperrwirkung mit dem Sperrkörper 12 zu erzielen.

Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich der nachstehenden Ansprüche fallen.

## Patentansprüche

1. Rotationsarretierung (10) mit einem um eine Rotationsache (A) angeordneten Sperrkörper (12), mindestens einem Sperrelement (22), das radial mit dem Sperrkörper (12) in Formschluss bringbar ist, wobei am Sperrkörper (12) hierzu eine Vielzahl von Aufnahmen (12a) für das Sperrelement (22) ausgebildet sind, **dadurch gekennzeichnet, dass** das Sperrelement (22) einen Bolzen (24) ausgeformt hat, der zur radialen Betätigung des Sperrelements (22) in einer Kontur (2) geführt ist, wobei eine Trägerscheibe (4) mit einem Getriebegehäuse drehfest verbunden ist, an dem der Sperrkörper (12) sitzt, wobei eine Betätigungsscheibe (8) auf einer Führungsscheibe (6) sitzt, dass zwischen der Betätigungsscheibe (8) und der Führungsscheibe (6) Schraubenfedern (9) vorgesehen sind, die die auf die Betätigungsscheibe (8) wirkenden Kräfte in die Führungsscheibe (6) leiten, wobei der Sperrkörper (12) an einem Stirnrad (41) eines Differenzials (40) integriert ist.

2. Rotationsarretierung nach Anspruch 1, wobei eine Trägerscheibe (4) zur radialen Führung der Sperrelemente (22) vorgesehen ist und eine Führungsscheibe (6) auf der Trägerscheibe (4) sitzt und dass in der Führungsscheibe (6) pro Sperrelement (22) die Kontur (2) für den Bolzen (24) des Sperrelements (22) ausgebildet ist.

3. Rotationsarretierung nach den Ansprüchen 1 und 2, wobei die Kontur (2) Z-förmig ausgeformt ist.

4. Rotationsarretierung nach den Ansprüchen 1 bis 3, wobei das Sperrelement (22) aus einem Blech gestanzt ist und der Bolzen (24) durchgesetzt ist.

5. Rotationsarretierung nach den Ansprüchen 1 bis 3, wobei das Sperrelement (22) aus einem Blech gestanzt ist und der Bolzen (24) als Zylinderrolle in eine Bohrung des Sperrelements (22) eingepresst ist.

6. Rotationsarretierung nach den Ansprüchen 1 bis 3, wobei die Führungsscheibe (6) und die mindestens eine Kontur (2) in der Führungsscheibe (6) mittels eines Stanzprozesses hergestellt sind.

7. Rotationsarretierung nach einem der Ansprüche 1 bis 6, wobei die Sperrelemente (22) radial nach außen bewegbar sind, um mit dem Sperrkörper (12) zusammenzuwirken.

8. Rotationsarretierung nach einem der Ansprüche 1 bis 6, wobei die Sperrelemente (22) radial nach innen bewegbar sind, um mit dem Sperrkörper (12) zusammenzuwirken.

9. Rotationsarretierung nach einem der Ansprüche 1 bis 8, wobei die Trägerscheibe (4) eine Außenverzahnung (5) ausgebildet hat, die eine formschlüssige Verbindung mit einem Getriebegehäuse bildet.

10. Rotationsarretierung nach Anspruch 9, wobei Führungsscheibe (6) auch die Betätigungsscheibe ist.

11. Rotationsarretierung nach den Ansprüchen 9 bis 10, wobei der Sperrkörper (12) mit einem Getriebeträger fest verbunden ist.

12. Rotationsarretierung nach Anspruch 11, wobei der Sperrkörper (12) mit einem Getriebeträger vernietet ist.

13. Rotationsarretierung nach den Ansprüchen 8 bis 12, wobei der Sperrkörper (12) ein Rad ist, das aus Blech geformt ist und Bohrungen (53) für die Nietverbindung aufweist.

14. Rotationsarretierung nach den Ansprüchen 1 bis 13, wobei drei Sperrelemente (22) radial in Bezug auf den Sperrkörper (12) gleich verteilt angeordnet sind.

## Claims

1. Rotational stop (10), with a blocking body (12) arranged about an axis of rotation (A), and with at least one blocking element (22) which can be brought into positive connection radially with the blocking body (12), a multiplicity of receptacles (12a) for the blocking element (22) being formed for this purpose on the blocking body (12), **characterized in that** the blocking element (22) has, shaped out, a bolt (24) which is guided in a contour (2) for the radial actuation of the blocking element (22), a carrier disc (4) being connected fixedly in terms of rotation to a transmission housing, on which the blocking body (12) is seated, an actuating disc (8) being seated on a guide disc (6), and **in that**, between the actuating disc (8) and the guide disc (6), helical springs (9) are provided, which conduct the forces acting upon the actuating disc (8) into the guide disc (6), the blocking body (12) being integrated on a spur wheel (41) of a differential (40).

2. Rotational stop according to Claim 1, a carrier disc (4) for the radial guidance of the blocking elements (22) being provided, and a guide disc (6) being seated on the carrier disc (4), and the contour (2) for the bolt (24) of the blocking element (22) being formed, for each blocking element (22), in the guide disc (6).

3. Rotational stop according to Claims 1 and 2, the contour (2) being of z-shaped form.

4. Rotational stop according to Claims 1 to 3, the blocking element (22) being stamped out of a metal sheet and the bolt (24) being pushed through.

5. Rotational stop according to Claims 1 to 3, the blocking element (22) being stamped out of a metal sheet and the bolt (24) being pressed as a cylindrical roller into a bore of the blocking element (22).

6. Rotational stop according to Claims 1 to 3, the guide disc (6) and the at least one contour (2) in the guide disc (6) being produced by means of a stamping process.

7. Rotational stop according to one of Claims 1 to 6, the blocking elements (22) being moveable radially outwards in order to co-operate with the blocking body (12).

8. Rotational stop according to one of Claims 1 to 6, the blocking elements (22) being moveable radially inwards in order to co-operate with the blocking body (12).

9. Rotational stop according to one of Claims 1 to 8, the carrier disc (4) halving formed on it an external toothing (5) which makes a positive connection with a transmission housing.

10. Rotational stop according to Claim 9, the guide disc (6) also being the actuating disc.

11. Rotational stop according to either one of Claims 9 and 10, the blocking body (12) being connected firmly to a transmission carrier.

12. Rotational stop according to Claim 11, the blocking body (12) being riveted to a transmission carrier.

13. Rotational stop according to Claims 8 to 12, the blocking body (12) being a wheel which is formed out of sheet metal and has bores (53) for the riveted joint.

14. Rotational stop according to Claims 1 to 13, three blocking elements (22) being arranged so as to be equally distributed radially with respect to the blocking body (12).

## Revendications

1. Dispositif d'arrêt de rotation (10) avec un corps d'arrêt (12) disposé autour d'un axe de rotation (A), au moins un élément d'arrêt (22), qui peut être mis en prise radialement par emboîtement avec le corps d'arrêt (12), dans lequel une multiplicité de logements (12a) pour l'élément d'arrêt (22) sont formés à cet effet sur le corps d'arrêt (12), **caractérisé en ce que** l'élément d'arrêt (22) comporte un bouton saillant (24), qui est guidé dans un contour (2) en vue de l'actionnement radial de l'élément d'arrêt (22), dans lequel une disque de support (4) est assemblé solidairement en rotation avec un boîtier d'engrenage sur lequel repose le corps d'arrêt (12), dans lequel un disque d'actionnement (8) repose sur un disque de guidage (6), **en ce qu'**il est prévu entre le disque d'actionnement (8) et le disque de guidage (6) des ressorts hélicoïdaux (9), qui conduisent les forces agissant sur le disque d'actionnement (8) dans le disque de guidage (6), dans lequel le corps d'arrêt (12) est intégré à une roue droite (41) d'un différentiel (40).

2. Dispositif d'arrêt de rotation selon la revendication 1, dans lequel il est prévu un disque de support (4) pour le guidage radial des éléments d'arrêt (22) et un disque de guidage (6) repose sur le disque de support (4), et en ce que le contour (2) pour le bouton (24) de l'élément d'arrêt (22) est formé dans le disque de guidage (6) par élément d'arrêt (22).

3. Dispositif d'arrêt de rotation selon les revendications 1 et 2, dans lequel le contour (2) est configuré en forme de Z.

4. Dispositif d'arrêt de rotation selon les revendications 1 à 3, dans lequel l'élément d'arrêt (22) est découpé hors d'une tôle et le bouton (24) est enfoncé.

5. Dispositif d'arrêt de rotation selon les revendications 1 à 3, dans lequel l'élément d'arrêt (22) est découpé hors d'une tôle et le bouton (24) est serti sous forme de rouleau cylindrique dans un trou percé dans l'élément d'arrêt (22).

6. Dispositif d'arrêt de rotation selon les revendications 1 à 3, dans lequel le disque de guidage (6) et ledit au moins un contour (2) dans le disque de guidage (6) sont produits au moyen d'un procédé de découpage.

7. Dispositif d'arrêt de rotation selon les revendications 1 à 6, dans lequel les éléments d'arrêt (22) sont mobiles radicalement vers l'extérieur, afin de coopérer avec le corps d'arrêt (12).

8. Dispositif d'arrêt de rotation selon les revendications 1 à 6, dans lequel les éléments d'arrêt (22) sont mobiles radicalement vers l'intérieur, afin de coopérer avec le corps d'arrêt (12).

9. Dispositif d'arrêt de rotation selon les revendications 1 à 8, dans lequel le disque de support (4) présente une denture extérieure (5), qui forme une liaison par emboîtement avec un boîtier d'engrenage.

10. Dispositif d'arrêt de rotation selon la revendication 9, dans lequel le disque de guidage (6) est également le disque d'actionnement.

11. Dispositif d'arrêt de rotation selon les revendications 9 à 10, dans lequel le corps d'arrêt (12) est solitaire d'un support d'engrenage.

12. Dispositif d'arrêt de rotation selon la revendication 11, dans lequel le corps d'arrêt (12) est rivé à un support d'engrenage.

13. Dispositif d'arrêt de rotation selon les revendications 8 à 12, dans lequel le corps d'arrêt (12) est une roue, qui est formée à partir de tôle et qui présente des trous (53) pour l'assemblage par rivetage.

14. Dispositif d'arrêt de rotation selon les revendications 1 à 13, dans lequel trois éléments d'arrêt (22) sont disposés radialement d'une façon uniformément répartie par rapport au corps d'arrêt (12).
